Europäisches Patentamt

European Patent Office

Office européen des brevets

(19)

(11) **EP 0 592 279 B1**

(12) **FASCICULE DE BREVET EUROPEEN**

(45) Date de publication et mention
de la délivrance du brevet:
**30.07.1997  Bulletin 1997/31**

(51) Int Cl.$^6$: **H04N 9/31**, G02B 27/28,
G03B 27/16, G02F 1/1335

(21) Numéro de dépôt: **93402361.5**

(22) Date de dépôt: **27.09.1993**

(54) **Procédé et dispositif de projection d'une image en couleur résultant d'une modulation par valves optiques**

Farbprojektionsverfahren und -vorrichtung von durch Modulation optischer Lichtventile entstandenen Bildern

Color projection method and device of images caused by the modulation of optical valves

(84) Etats contractants désignés:
**BE CH DE GB LI NL**

(30) Priorité: **28.09.1992  FR 9211539**

(43) Date de publication de la demande:
**13.04.1994  Bulletin 1994/15**

(73) Titulaire: **SEXTANT AVIONIQUE**
**F-92360 Meudon-la-Forêt (FR)**

(72) Inventeurs:
• **Barbier, Bruno**
**F-75116 Paris (FR)**

• **Lach, Patrick**
**F-75116 Paris (FR)**

(74) Mandataire: **Ballot, Paul Denis Jacques et al**
**Cabinet Ballot-Schmit,**
**7, rue Le Sueur**
**75116 Paris (FR)**

(56) Documents cités:
**EP-A- 0 470 588          EP-A- 0 475 796**
**WO-A-88/10545          WO-A-92/01969**

• **PATENT ABSTRACTS OF JAPAN vol. 15, no. 465**
**(E-1138) 26 Novembre 1991 & JP-A-03 201 695**
**(MATSUSHITA ELECTRIC) 3 Septembre 1991**

Printed by Jouve, 75001 PARIS (FR)

## Description

L'invention se rapporte à un procédé et à un dispositif de projection d'une image en couleur résultant d'une modulation par valves optiques. Elle s'applique notamment à la projection d'une image sur un grand écran ou à la projection d'une image pour l'aide à la conduite de véhicules tels que des automobiles et des avions.

Le procédé classique de projection d'une image en couleur consiste à moduler au moyen de trois valves optiques trois faisceaux de couleur correspondants, respectivement représentatifs des trois composantes fondamentales de couleur qui, dans un exemple courant, sont le rouge, le vert et le bleu. De tels arrangements sont connus par exemple de EP-A-0 470 588 ou de EP-A-0 475 796, dans lesquels des séparateurs de composantes couleurs du type dichroïque sont utilisés pour produire les faisceaux de couleur. Les trois faisceaux de couleur peuvent aussi être obtenus par la séparation directe ou successive d'un faisceau primaire de lumière blanche dépolarisée et collimatée. Selon la séparation successive, le faisceau primaire est d'abord séparé en deux faisceaux secondaires dépolarisés, l'un représentatif de l'une des trois composantes de couleur et l'autre représentatif des deux autres composantes que l'on sépare ensuite en deux faisceaux. On obtient ainsi trois faisceaux de couleur dépolarisés.

Les valves optiques reçoivent respectivement les trois signaux électriques respectivement représentatifs des trois mêmes composantes fondamentales de couleur d'un signal électrique vidéo couleur. Elles modulent les trois faisceaux de couleur respectifs par rotation de la polarisation du flux lumineux incident. La modulation nécessite donc la polarisation préalable des trois faisceaux de couleur, puis une analyse de la polarisation. Chacune des trois valves est donc placée entre un polariseur linéaire par absorption et un analyseur linéaire de polarisation. En pratique, il s'avère que les polariseurs par absorption font perdre environ la moitié de l'énergie lumineuse des trois faisceaux de couleur dépolarisés. En considérant comme négligeables les autres pertes dans le dispositif de projection, l'image en couleur résultant de la combinaison des trois faisceaux de couleur modulés a une énergie environ deux fois plus faible que l'énergie du faisceau primaire de lumière blanche.

Il s'ensuit qu'un projecteur classique mettant en oeuvre ce procédé de projection d'une image en couleur comprend un générateur d'un faisceau de lumière blanche dépolarisée et collimatée, un séparateur du faisceau primaire en faisceaux secondaires, trois valves optiques pour la modulation respective de trois faisceaux de couleur respectivement représentatifs de trois composantes fondamentales de couleur et issus des faisceaux secondaires, et des moyens de combinaison des trois faisceaux de couleur pour constituer un faisceau de couleur composite représentatif de l'image en couleur. Une variante de projecteur connu est décrite dans JP-A-3 201 695, qui décrit un projecteur couleur dans lequel sont générés deux faisceaux secondaires de lumière blanche à directions de polarisation perpendiculaires, le premier faisceau étant modulé par un signal de luminance, le deuxième par un signal de couleur, les signaux modulés étant recombinés avant projection.

Le générateur du faisceau primaire est couramment fait d'une source unique ou composée de lumière blanche dépolarisée et d'un dispositif de collimation. Les valves sont des plaques matricielles à cristal liquide, enserrées chacune entre un premier polariseur linéaire par absorption et un analyseur de polarisation formé ordinairement d'un second polariseur linéaire par absorption.

Pour la suite de la description, il est à noter qu'il existe deux sortes de moyens de suppression, à savoir les moyens pour supprimer dans un rayonnement incident une bande spectrale soit par absorption (filtrage), soit par déviation dans une direction (miroir multidiélectrique), et les moyens pour supprimer dans un rayonnement incident une direction de polarisation soit par absorption (polariseur), soit par déviation dans une direction de propagation (miroir multidiélectrique). Ces moyens de suppression sont agencés de façon que l'intensité lumineuse de chacun des trois faisceaux de couleur constituant l'image projetée ne provienne que de l'une des trois valves optiques correspondantes.

Les projecteurs classiques posent actuellement deux problèmes majeurs. Le premier problème concerne leur fiabilité directement liée à la fiabilité de la source lumineuse. On accroît leur fiabilité en y incorporant une lampe de secours, activée en cas de panne de la lampe principale. Bien sur, la génération du faisceau primaire de secours doit obéir aux mêmes contraintes que celles relatives au faisceau primaire principal. Il faut donc installer fixement les deux générateurs de faisceaux primaires dans un projecteur. Jusqu'à présent, l'installation de secours s'intègre mal aux dispositifs de projection classiques et fournit une image en couleur de qualité moindre que celle obtenue de la lampe principale.

Par exemple, une solution connue pour réaliser un projecteur consiste à séparer le faisceau primaire principal à l'aide de deux miroirs multidiélectriques. La solution trouvée pour l'éclairage de secours consiste à placer la lampe de secours derrière le second miroir. Cette solution présente l'inconvénient majeur d'éclairer deux valves par deux faisceaux de couleurs différentes de celles issues de la lampe principale et de ne pas éclairer l'autre valve. Il n'est donc pas possible de reproduire toutes les teintes de façon satisfaisante avec l'installation de secours.

Le deuxième problème concerne l'adaptation de l'intensité lumineuse de l'image projetée aux conditions lumineuses ambiantes, notamment à celles du jour et de la nuit. Pour rendre l'image très lumineuse le jour et peu lumineuse la nuit, la puissance lumineuse de l'image projetée doit pouvoir varier fortement tout en gardant la même qualité géométrique et spectrale de l'image. Le document EP-A-0 246 128 présente les difficultés de modifier fortement l'intensité lumineuse de la source du faisceau primaire de lumière blanche et propose comme solution un dispositif de modulation du faisceau primaire après collimation. Ce dispositif complexe s'ajoute donc à la structure du projecteur et en grève le coût.

D'autre part, la compatibilité des dispositifs de projection avec les équipements de vision nocturne impose à ces dispositifs un spectre d'émission particulier en utilisation de nuit. Il faut en effet atténuer la partie rouge et infrarouge du spectre émis la nuit. Cette contrainte nécessiterait donc d'ajouter encore un dispositif particulier pour modifier le spectre des faisceaux primaires émis et activé pour seulement les projections de nuit.

L'invention résout ces deux problèmes posés par le procédé de projection classique et les dispositifs de projection en résultant. Grâce à l'invention, le faisceau primaire de secours peut fournir une image de qualité égale à celle issue du faisceau primaire principal. En outre, l'invention peut offrir les deux types de projection adaptés aux conditions de jour et de nuit. Tous ces avantages ne proviennent pas d'une complication du procédé et des dispositifs de projection classiques, mais d'un nouveau procédé de projection aussi simple que le procédé actuel et du dispositif de projection mettant en oeuvre ce procédé.

Selon l'invention, le procédé de projection d'une image en couleur résultant de la modulation par valves optiques de trois faisceaux issus d'un faisceau primaire de lumière blanche dépolarisée et collimatée est caractérisé en ce que les trois faisceaux sont issus du faisceau primaire par l'intermédiaire de deux faisceaux secondaires de lumière blanche dont les directions de propagation sont séparées angulairement et dont les polarisations sont linéaires et perpendiculaires entre elles.

En corollaire, un dispositif de projection d'une image en couleur conforme à l'invention comprenant un générateur d'un faisceau de lumière blanche dépolarisée et collimatée, un séparateur du faisceau primaire en faisceaux secondaires, trois valves optiques pour la modulation respective de trois faisceaux de couleur respectivement représentatifs de trois composantes fondamentales de couleur et issus des faisceaux secondaires, et des moyens de combinaison des trois faisceaux de couleur, est caractérisé en ce que le séparateur produit deux faisceaux secondaires de lumière blanche dont les directions de propagation sont séparées angulairement et dont les polarisations sont linéaires et perpendiculaires entre elles.

Les directions des deux faisceaux secondaires sont préférentiellement perpendiculaires entre elles tandis que les polarisations peuvent être elliptiques et de sens opposés.

Les caractéristiques et avantages de l'invention ressortiront de la description qui suit, donnée à titre d'exemple, et illustrée dans les dessins annexés dans lesquels :

- la figure 1 illustre schématiquement un mode réalisation d'un dispositif de projection conforme à l'invention ;

- la figure 2 illustre schématiquement les faisceaux primaires et secondaires au niveau du séparateur d'une variante de réalisation du dispositif de projection représenté sur la figure 1 et les diagrammes représentant la densité spectrale de puissance de ces faisceaux ; et

- les figures 3 et 4 illustrent schématiquement deux autres variantes de réalisation d'un dispositif de projection conforme à l'invention.

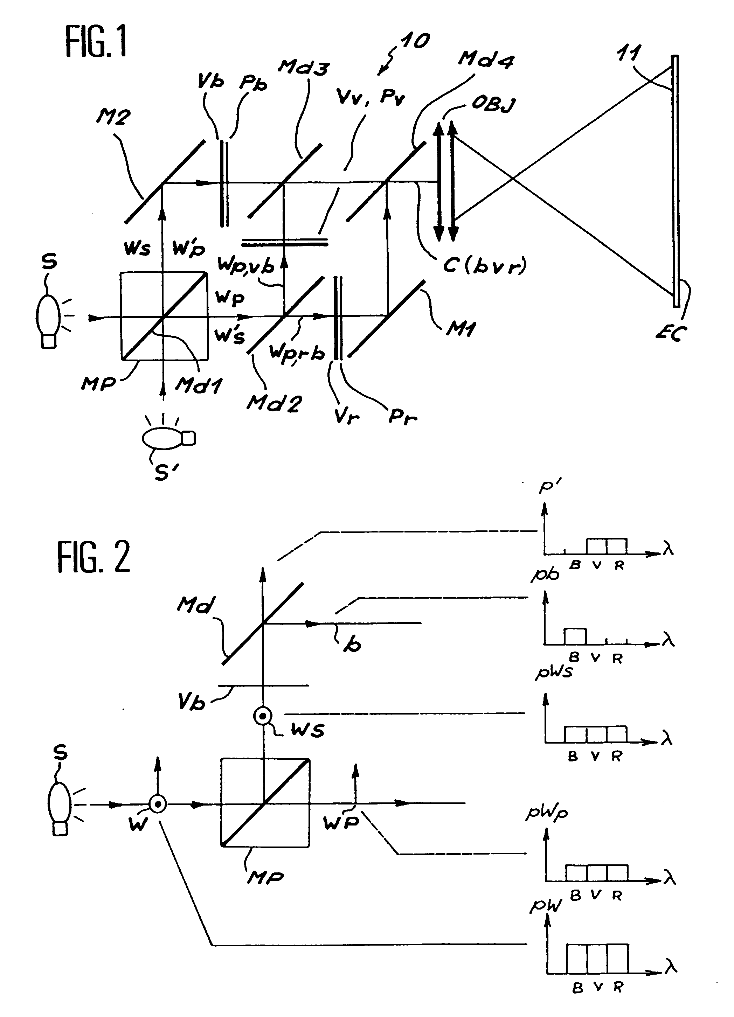

La figure 1 représente un premier mode de réalisation conforme à l'invention d'un dispositif de projection 10 d'une image en couleur 11. Le dispositif de projection 10 comprend : un générateur S d'un faisceau primaire principal de lumière blanche dépolarisée et collimatée W et un générateur S' d'un faisceau primaire auxiliaire de lumière blanche dépolarisée et collimatée W', les deux générateurs S et S' étant représentés symboliquement par des lampes et étant constitués ordinairement en pratique par une source de lumière blanche et par un dispositif de collimation non illustrés ; un séparateur polarisant MP présentant deux faces recevant respectivement les deux faisceaux primaires W et W' et produisant deux faisceaux secondaires de lumière blanche polarisée Ws, Wp à partir du faisceau primaire principal W, et W's, W'p à partir du faisceau primaire auxiliaire W', le séparateur polarisant MP étant constitué dans l'exemple illustré par un premier miroir multidiélectrique polarisant Md1 monté dans un cube ; trois valves optiques Vb, Vv, Vr recevant respectivement les signaux électriques représentatifs de trois composantes fondamentales de couleur (le bleu b, le vert v et le rouge r dans l'exemple illustré) d'un signal vidéo couleur non illustré, ces valves étant suivies d'analyseurs linéaires de polarisation respectifs Pb, Pv, Pr formés par exemple de polariseurs linéaires absorbants ; deux miroirs M1 et M2 en tant que moyens de déflexion ; des moyens de suppression constitués dans l'exemple illustré par trois miroirs multidiélectriques Md2, Md3 et Md4 destinés à former trois faisceaux de couleurs bleue b, verte v et rouge r ; des moyens de combinaison des trois faisceaux de couleur b, v et r, ces moyens étant constitués dans l'exemple illustré par les moyens de suppression Md2, Md3, Md4 et produisant un faisceau de couleur composite C représentatif de l'image en couleur 11 ; et un objectif OBJ pour la projection de l'image sur un moyen quelconque formant écran EC.

Les deux faisceaux primaires W et W' frappent le cube séparateur polarisant MP sur deux faces adjacentes et séparées par le miroir multidiélectrique Md1. Les deux faisceaux secondaires qui émergent du cube MP sont perpendiculaires entre eux et sont alignés avec les deux faisceaux primaires W et W'. Comme cela ressort plus clairement de l'exemple illustré dans la figure 2, les faisceaux secondaires Ws et Wp issus du faisceau primaire W ont respectivement une direction de polarisation parallèle (p) au plan d'incidence et une direction de polarisation perpendiculaire (s) au plan d'incidence. Pour cette raison, les faisceaux secondaires sont désignés par la lettre W ou W' du faisceau primaire qui les a produits, suivie de la lettre p ou s de leur direction de polarisation.

Dans la figure 1, le faisceau secondaire Wp se propage dans la direction du faisceau primaire principal W, tandis que la direction de propagation perpendiculaire du faisceau secondaire Ws est défléchie par le miroir M2 pour être parallèle au faisceau secondaire Wp. Le faisceau défléchi Ws est modulé par la composante de couleur bleue appliquée sur la valve Vb, puis il est analysé par le polariseur absorbant Pb. L'autre faisceau secondaire Wp est divisé par le séparateur Md2 en deux faisceaux tertiaires Wpvb et Wprb perpendiculaires entre eux. Dans l'exemple illustré, le séparateur Md2 est un miroir multidiélectrique qui ne défléchit pas le rouge mais défléchit le vert, tandis que le bleu se partage entre les deux faisceaux tertiaires. Le faisceau rouge et bleu Wprb qui se propage dans la direction du faisceau Wp est modulé par la valve Vr, puis il est analysé par le polariseur absorbant Pr. De même, le faisceau vert et bleu Wpvb est modulé par la valve Vv, puis il est analysé par le polariseur absorbant Pv.

Les faisceaux issus des trois valves et de leurs analyseurs de polarisation traversent des moyens de suppression. Dans le faisceau secondaire Ws modulé par la valve Vb et analysé par le polariseur Pb, les deux composantes rouge et verte sont respectivement supprimées par les miroirs Md3 et Md4 placés dans la direction de propagation du faisceau Ws. Il en résulte dans cette direction un faisceau modulé de couleur bleue. Quant au faisceau secondaire Wp, on a vu que le miroir multidiélectrique Md2 constituait un moyen de suppression. Dans le faisceau rouge et bleu Wprb, la composante bleue est supprimée par le miroir Md4. Le faisceau Wprb est défléchi par le miroir M1 pour être filtré par le miroir Md4 et fournir un faisceau modulé de couleur rouge se propageant dans la direction du faisceau Ws et se combinant ainsi avec le faisceau modulé de couleur bleue. De même, dans le faisceau vert et bleu Wpvb, la composante bleue est supprimée par le miroir Md3 et/ou Md4 de façon à fournir en sortie du miroir Md4 un faisceau modulé de couleur verte se combinant avec les deux autres faisceaux modulés de couleur pour former le faisceau modulé composite de couleur C représentatif de l'image en couleur 11 projetée.

Lorsque le faisceau primaire auxiliaire W' illumine le séparateur MP en remplacement du faisceau primaire principal W, les faisceaux secondaires W'p et W's ont des directions de propagation perpendiculaires à celles des faisceaux Wp et Ws. En d'autres termes, comme illustré, les faisceaux W'p et W's correspondent respectivement aux faisceaux Ws et Wp. Les miroirs multidiélectriques et les analyseurs sont indifférents à ce changement de polarisation. Par contre, les valves optiques inversent le sens de variation de la rotation induite par la tension de modulation de chaque valve par rapport au sens obtenu avec les faisceaux secondaires Wp et Ws issus du faisceau primaire principal. On remédie à cet inconvénient en modifiant la tension de modulation de chaque valve.

De nombreuses variantes peuvent être apportées à l'exemple de réalisation représenté sur la figure 1. La figure 2 illustre une première variante, consistant à remplacer le miroir M2 par un miroir multidiélectrique Md. Dans ce cas, le faisceau défléchi par le miroir Md a seulement la composante bleue et traverse sans déflexion les deux miroirs multidiélectriques Md3 et Md4 en tant que faisceau de couleur bleue b. La valve Vb peut être placée avant ou après la suppression des deux composantes verte et rouge par le miroir multidiélectrique Md. La figure 2 représente la valve Vb avant la suppression, comme dans l'exemple précédent, mais il est clair qu'elle pourrait être placée sur le trajet conduisant à l'objectif OBJ.

D'une manière générale, les moyens de suppression des composantes excédentaires peuvent être placés indifféremment avant ou après modulation par les valves. L'avantage de l'exemple illustré dans la figure 1 réside dans la possibilité de donner aux moyens de combinaison la fonction supplémentaire de moyens de suppression des faisceaux de couleur. Il est donc clair que les moyens de combinaison pourraient en être séparés. De même, le séparateur polarisant MP pourrait être d'un type différent de celui illustré, bien connu de l'homme du métier, et les miroirs multidiélectriques pourraient être remplacés par des filtres absorbants. D'autre part, bien que dans la séparation illustrée du faisceau secondaire Wp, la composante bleue ait été partagée entre les faisceaux tertiaires Wprb et Wpvb, il est possible que cette composante soit seulement contenue dans l'un des deux faisceaux tertiaires, ou qu'elle soit exclue d'eux, par filtrage par exemple.

La description qui précède met bien en relief les nombreux avantages du procédé de l'invention. Il permet de rendre la qualité de l'image indépendante du faisceau primaire, principal ou auxiliaire. En d'autres termes, la fonction de secours du faisceau secondaire fournit la même qualité de l'image issue du faisceau primaire principal. De cet avantage découle un autre avantage de pouvoir donner au faisceau primaire principal les conditions requises pour une projection de jour et au faisceau primaire auxiliaire les conditions requises pour une projection de nuit.

Un autre avantage important réside dans la puissance lumineuse du faisceau de couleur composite C résultant de la mise en oeuvre du procédé conforme à l'invention. La figure 2 illustre les diagrammes représentatifs de la densité spectrale de puissance pW du faisceau primaire principal W, pWs et pWp celle des deux faisceaux secondaires Ws et Wp, pWb celle du faisceau modulé de couleur bleue b, et pC celle du faisceau de couleur composite C. En désignant par B, V et R les trois composantes de couleur, la puissance lumineuse dépolarisée du faisceau blanc est donc exprimée par l'égalité pW = pB + pV + pR. On a vu en introduction que le procédé antérieur de projection consistait à séparer directement ou successivement les trois composantes de couleur, de sorte que la puissance des faisceaux de couleur est respectivement pB, pV et pR. Cependant, compte tenu de l'absorption des polariseurs linéaires appliqués avant les faces d'incidence des valves respectives, la puissance pC du faisceau combinant les trois faisceaux de couleur est pC = 0,5 (pB + pV + pR). Selon l'invention, en supposant aussi les pertes de puissance négligeables dans le cube MP, la puissance pW du faisceau principal se partage en parties égales dans les deux faisceaux secondaires Wp et Ws, de sorte que pWp = pWs = 0,5 (pB + pV + pR). Ceci apparaît sur les diagrammes par les aires des surfaces des rectangles. Le faisceau secondaire blanc polarisé Ws qui est modulé par la valve Vb (sans polariseur préalable, puisque le faisceau est déjà polarisé) garde la même puissance pWs. Après filtrage par le miroir multidiélectrique Md, les composantes pV et pR sont éliminées (dont la puissance est désignée par p' dans le diagramme correspondant de la figure 2), de sorte que la puissance pb du faisceau de couleur bleue b est égale à 0,5 pB. Quant au faisceau secondaire Wp, on a vu dans l'exemple de projecteur représenté sur la figure 1 qu'il était divisé en deux faisceaux Wprb et Wpvb, l'un contenant le rouge et l'autre le vert, les deux se partageant la composante bleue dans la proportion α et (1-α) Les puissances correspondant à ces deux faisceaux sont donc exprimées par :

$$pWprb = 0,5 \ (pR + \alpha \ pB)$$

et

$$pWpvb = 0,5 \ (pV + (1-\alpha) \ pB)$$

La composante bleue excédentaire étant supprimée pour constituer les deux faisceaux de couleur verte v et rouge r, leur puissance est donc

$$pv = 0,5 \ pV \ et \ pr = 0,5 \ pR$$

Le faisceau de couleur composite C a donc la puissance pC = 0,5 (pB + pV + pR). On obtient ainsi du procédé de l'invention environ la même puissance que celle obtenue du procédé classique. En d'autres termes, la baisse de rendement énergétique due à la présence des composantes excédentaires dans les faisceaux secondaires blancs est compensée par l'augmentation du rendement de la modulation due à l'absence de polariseurs absorbants devant les valves. Il s'ensuit que le procédé conforme à l'invention peut être utilisé en remplacement du procédé classique, avec ou sans faisceau primaire auxiliaire.

Ceci constitue un avantage important de l'invention, en plus de ceux déjà cités.

Un autre avantage du procédé de l'invention est de pouvoir être mis en oeuvre facilement. On a vu dans l'exemple de la figure 1 que le projecteur 10 a une structure très simple.

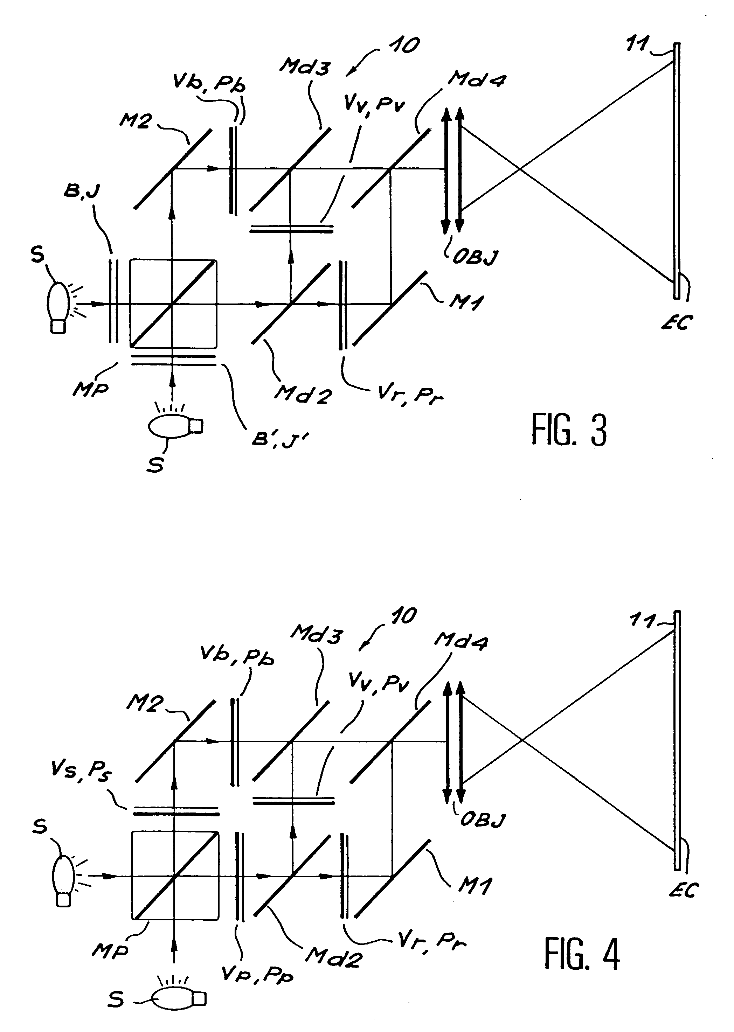

La figure 3 illustre une autre variante de réalisation d'un dispositif de projection 10 conforme à l'invention. Dans la figure 3, le dispositif de projection est celui de la figure 1, auquel on a ajouté deux polariseurs B et J comme solution à un problème que peut poser le mode de réalisation représenté sur la figure 1. Dans l'exemple de la figure 3, le séparateur polarisant MP peut ne pas fournir une parfaite séparation des polarisations, surtout lorsque les faisceaux incidents W et W' sont imparfaitement collimatés. Chacun des faisceaux secondaires contient en effet une partie de rayonnement polarisé dans une direction perpendiculaire à la direction principale de polarisation. Le taux de polarisation de chaque faisceau, défini par le rapport de la puissance polarisée dans une direction à la puissance totale du faisceau, n'est donc pas de 100%. Il s'ensuit une dégradation du contraste des images fournies par chacune des valves. Les polariseurs B et J qui vont être maintenant définis sont placés de façon à être tous les deux traversés par le faisceau primaire principal W et éventuellement par le faisceau primaire auxiliaire W', afin d'améliorer le taux de polarisation des deux faisceaux secondaires qui en sont issus. Ils constituent ainsi des moyens d'amélioration du taux de polarisation en absorbant les composantes de couleur indésirables.

Les deux polariseurs B et J sont sélectifs en longueurs d'onde. Le polariseur B (aspect bleuté en lumière naturelle) a pour rôle d'améliorer le taux de polarisation des composantes rouge et verte du faisceau secondaire Wp polarisé parallèlement au plan d'incidence sur le séparateur polarisant MP. Il n'altère aucune des composantes de couleur dans une direction de polarisation choisie pour correspondre avec la direction s perpendiculaire au plan d'incidence, tandis qu'il absorbe les composantes rouge et verte dans la direction de polarisation orthogonale p.

Le polariseur J (d'aspect jaune en lumière naturelle) a pour rôle d'améliorer le taux de polarisation de la composante bleue du faisceau secondaire de polarisation s perpendiculaire au plan d'incidence du séparateur MP. Il absorbe la composante bleue dans la direction s et n'altère aucune des composantes dans la direction parallèle p. Par exemple, les polariseurs B et J utilisés ont été fabriqués par l'une des sociétés Sanritsu et Nitto. Le polariseur B est placé pour être traversé en premier par le faisceau primaire correspondant.

Le couple de polariseurs B, J a donc pour effet d'améliorer le taux de polarisation de la composante bleue du faisceau secondaire Ws en supprimant les radiations de couleur bleue polarisées parallèlement au plan d'incidence, et d'améliorer le taux de polarisation des composantes rouge et verte du faisceau secondaire Wp en supprimant les radiations de couleur rouge ou verte polarisées perpendiculairement au plan d'incidence.

Dans ces conditions, compte tenu du changement de polarisation des faisceaux secondaires issus du faisceau primaire auxiliaire, le couple de polariseurs B, J sont à placer de façon que leurs directions respectives de polarisation sont perpendiculaires à celles des polariseurs du couple du faisceau principal.

La figure 4 illustre une autre variante de réalisation d'un dispositif de projection 10 conforme à l'invention tel que représenté sur la figure 3. Le dispositif de projection de la figure 4 résout le même problème que celui de la figure 3. En bref, une imperfection de la collimation d'un faisceau primaire se traduit par une dégradation du contraste des valves créant l'image Vb, Vv et Vr. Selon cette variante, dans le dispositif de projection représenté sur la figure 1, chaque faisceau secondaire traverse des moyens d'amélioration du taux de polarisation, constituant dans l'exemple de la figure 4 un dispositif pour modifier la direction de polarisation du faisceau selon que le faisceau primaire principal W ou auxiliaire W' est utilisé. Dans cet exemple, ce dispositif est formé d'une valve à cristal liquide (sans formation d'image) suivie d'un polariseur linéaire neutre. Ainsi, les dispositifs respectivement traversés par les faisceaux secondaires Wp et Ws sont formés de valves Vp et Vs respectivement suivies des polariseurs linéaires neutres Ps et Pp. Ce dispositif a pour avantage de reporter la dégradation du contraste des valves Vb, Vv et Vr sur les valves supplémentaires Vs et Vp. Par conséquent, chacune des valves formant l'image est illuminée par un faisceau de direction de polarisation constante, indépendamment du faisceau primaire W ou W'. Cette variante de réalisation peut donc seulement avoir pour but de corriger les effets du changement de direction de polarisation des faisceaux secondaires issus du faisceau principal.

L'invention a été décrite suivant différents modes de réalisation dans lesquels les deux faisceaux secondaires de lumière blanche ont des directions de propagation qui sont perpendiculaires entre elles mais il est clair que l'invention s'applique lorsque ces directions ne sont pas perpendiculaires entre elles.

Par ailleurs, l'invention a été décrite dans le cas de faisceaux secondaires qui sont polarisés linéairement et perpendiculairement entre eux mais elle s'applique ainsi au cas où les faisceaux secondaires seraient polarisés elliptiquement et de sens opposés.

**Revendications**

1. Procédé de projection d'une image en couleur résultant de la modulation par valves optiques (Vb, Vv, Vr) de trois faisceaux de couleur, issus d'un faisceau primaire de lumière blanche dépolarisée et collimatée (W) par l'intermédiaire de deux faisceaux secondaires de lumière blanche (Wp, Ws) dont les directions de propagation sont séparées angulairement et dont les polarisations sont linéaires et perpendiculaires entre elles, caractérisé en ce que l'un des faisceaux de couleur est issu de l'un des deux faisceaux secondaires et les deux autres faisceaux de couleur sont issus de l'autre faisceau secondaire.

2. Procédé de projection d'une image en couleur résultant de la modulation par valves optiques (Vb, Vv, Vr) de trois faisceaux de couleur, issus d'un faisceau primaire de lumière blanche dépolarisée et collimatée (W), caractérisé en ce que les trois faisceaux sont issus du faisceau primaire par l'intermédiaire de deux faisceaux secondaires de lumière blanche (Wp, Ws) dont les directions de propagation sont séparées angulairement et dont les polarisations sont elliptiques et de sens opposés, l'un des trois faisceaux de couleur étant issu de l'un des deux faisceaux secondaires et les deux autres faisceaux de couleur étant issus de l'autre faisceau secondaire.

3. Procédé selon la revendication 1, ou 2, caractérisé en ce que les directions de propagation sont de préférence perpendiculaires entre elles.

4. Procédé selon la revendication 1, 2 ou 3, comprenant, auxiliaire de lumière blanche dépolarisée et collimatée en outre, la génération d'un faisceau primaire (W') auxiliaire du faisceau primaire précité, et consistant à aligner les deux faisceaux secondaires (W's, W'p) issus du faisceau primaire auxiliaire (W') sur les deux faisceaux secondaires (Wp, Ws) issus du faisceau primaire (W) le faisceau auxiliaire remplaçant le faisceau primaire dans le cas d'absence du faisceau primaire.

5. Procédé selon l'une des revendication 1 à 4, caractérisé en ce qu'il consiste, avant ou après modulation par chaque valve, à supprimer les composantes de couleur indésirables.

6. Dispositif de projection (10) d'une image en couleur, comprenant un générateur d'un faisceau de lumière blanche dépolarisée et collimatée (W), un séparateur (MP) du faisceau primaire en deux faisceaux secondaires de lumière blanche (Wp, Ws) dont les directions de propagation sont perpendiculaires entre elles et dont les polarisations sont linéaires et perpendiculaires entre elles, trois valves optiques (Vb, Vv, Vr) pour la modulation respective de trois faisceaux de couleur (b, v, r) respectivement représentatifs de trois composantes fondamentales de couleur et issus des faisceaux secondaires, et des moyens de combinaison (Md2, Md3, Md4) des trois faisceaux de couleur, caractérisé en ce que l'un des faisceaux de couleur est issu de l'un des deux faisceaux secondaires et les deux autres faisceaux de couleur sont issus de l'autre faisceau secondaire.

7. Dispositif de projection (10) d'une image en couleur, comprenant un générateur d'un faisceau de lumière blanche dépolarisée et collimatée (W), un séparateur (MP) du faisceau primaire en faisceaux secondaires, trois valves optiques (Vb, Vv, Vr) pour la modulation respective de trois faisceaux de couleur (b, v, r) respectivement représentatifs de trois composantes fondamentales de couleur et issus des faisceaux secondaires, et des moyens de combinaison (Md2, Md3, Md4) des trois faisceaux de couleur, caractérisé en ce que le séparateur produit deux faisceaux secondaires de lumière blanche (Wp, Ws) dont les directions de propagation sont perpendiculaires entre elles et dont les polarisations sont elliptiques et de sens opposés et en ce que l'un des faisceaux de couleur est issu de l'un des deux faisceaux secondaires et les deux autres faisceaux de couleur sont issus de l'autre faisceau secondaire.

8. Dispositif selon la revendication 6 ou 7, comportant, en outre, un générateur d'un faisceau primaire auxiliaire (W') de lumière blanche dépolarisée et collimatée (W'), les faisceaux secondaires (W's, W'p) issus du faisceau primaire auxiliaire étant alignés sur les deux faisceaux secondaires (Wp, Ws) issus du faisceau primaire (W).

9. Dispositif selon la revendication 6, 7 ou 8, caractérisé en ce qu'un des faisceaux secondaires (Ws, W'p) traverse une des valves (Vb) et des moyens de suppression (Md3, Md4; Md) des deux composantes de couleur indésirables pour former un premier faisceau de couleur (b), et l'autre faisceau secondaire (Wp, W's) traverse un second séparateur (Md2) pour constituer deux faisceaux tertiaires (Wpvb, Wprb) incluant respectivement les deux composantes de couleur propres aux deux autres valves (Vv, Vr) et traversant respectivement ces deux valves ainsi que des moyens de suppression des composantes de couleur indésirables pour fournir les deux autres faisceaux de couleur (v, r).

10. Dispositif selon l'une des revendications 6 à 9, caractérisé en ce que les moyens de suppression constituent des moyens de combinaison.

11. Dispositif selon l'une des revendications 6 à 10, caractérisé en ce qu'il comporte des moyens améliorant le taux de polarisation des faisceaux secondaires.

12. Dispositif selon la revendication 11, caractérisé en ce que les moyens d'amélioration du taux de polarisation, tels que des polariseurs (B, J) absorbant les composantes de couleur indésirables, sont traversés par au moins l'un des faisceaux primaires (W, W').

13. Dispositif selon la revendication 10, caractérisé en ce que les moyens d'amélioration du taux de polarisation sont traversés respectivement par les deux faisceaux secondaires et constituent des moyens modifiant la direction de polarisation des faisceaux secondaires respectifs selon que l'un ou l'autre des faisceaux primaires est utilisé de façon à garder sensiblement constante la direction de polarisation du faisceau traversant chacune des valves indépendamment du faisceau primaire, tels que deux valves optiques (Vp, Vs) suivies respectivement de deux polariseurs linéaires neutres (Pp, Ps).

**Patentansprüche**

1. Verfahren zum Projizieren eines Farbbilds, welches aus der Modulation durch optische Ventile (Vb, Vv, Vr) von drei Farbstrahlen resultiert, die aus einem Primärstrahl aus weißem, nicht polarisiertem, kollimiertem Licht (W) über zwei Sekundärstrahlen aus weißem Licht (Wp, Ws) erzeugt werden, deren Propagationsrichtungen durch einen Winkel getrennt sind und deren Polarisationen linear und senkrecht zueinander sind, dadurch **gekennzeichnet,** daß einer der Farbstrahlen aus einem der zwei Sekundärstrahlen erzeugt wird und daß die zwei anderen Farbstrahlen aus dem anderen Sekundärstrahl erzeugt werden.

2. Verfahren zum Projizieren eines Farbbildes, welches aus der Modulation durch optische Ventile (Vb, Vv, Vr) von drei Farbstrahlen resultiert, welche aus einem Primärstrahl aus weißem, nicht polarisiertem, kollimiertem Licht (W) erzeugt werden, dadurch **gekennzeichnet,** daß die drei Strahlen aus dem Primärstrahl über zwei Sekundärstrahlen aus weißem Licht (Wp, Ws) erzeugt werden, deren Propagationsrichtungen durch einen Winkel getrennt sind und deren Polarisationen elliptisch und entgegengesetzt sind, wobei einer der drei Farbstrahlen aus einem der zwei Sekundärstrahlen erzeugt wird und die beiden anderen Farbstrahlen aus dem anderen Sekundärstrahl erzeugt werden.

3. Verfahren nach Anspruch 1 oder 2, dadurch **gekennzeichnet,** daß die Propagationsrichtungen vorzugsweise senkrecht zueinander sind.

4. Verfahren nach Anspruch 1, 2 oder 3, welches, zusätzlich zu dem weißen, nicht polarisierten, kollimierten Licht, weiterhin die Erzeugung eines Primärstrahls (W') zusätzlich zu dem besagten Primärstrahl umfaßt und darin besteht, die zwei Sekundärstrahlen (W's, W'p), die aus dem zusätzlichen Primärstrahl (W') erzeugt werden, mit den zwei Sekundärstrahlen (Wp, Ws), die aus dem Primärstrahl (W) erzeugt werden, auszurichten, wobei der zusätzliche Strahl den Primärstrahl im Fall der Abwesenheit des Primärstrahls ersetzt.

5. Verfahren nach einem der Ansprüche 1 bis 4, dadurch **gekennzeichnet,** daß es darin besteht, vor oder nach der Modulation durch jedes Ventil die unerwünschten Farbkomponenten zu unterdrücken.

6. Vorrichtung (10) zur Projektion eines Farbbildes, welches eine Quelle eines Strahls aus weißem, nicht polarisiertem, kollimiertem Licht (W), einen Separator (MP) zum Aufteilen des Primärstrahls in zwei Sekundärstrahlen aus weißem Licht (Wp, Ws), deren Propagationsrichtungen senkrecht zueinander sind und deren Polarisationen linear und senkrecht zueinander sind, drei optische Ventile (Vb, Vv, Vr) zur jeweiligen Modulation von drei Farbstrahlen (b, v, r), die jeweils repräsentativ für drei fundamentale Farbkomponenten sind und aus den Sekundärstrahlen erzeugt werden, und eine Einrichtung zum Kombinieren der drei Farbstrahlen (Md2, Md3, Md4) umfaßt, dadurch **gekennzeichnet,** daß einer der Farbstrahlen aus einem der zwei Sekundärstrahlen erzeugt wird, und die zwei anderen Farbstrahlen aus dem anderen Sekundärstrahl erzeugt werden.

7. Vorrichtung (10) zur Projektion eines Farbbildes, welches eine Quelle für einen Strahl aus weißem, nicht polarisiertem, kollimiertem Licht (W), einen Separator (MP) zum Auftrennen des Primärstrahls in Sekundärstrahlen, drei optische Ventile (Vb, Vv, Vr) zur jeweiligen Modulation von drei Farbstrahlen (b, v, r), welche jeweils repräsentativ für drei fundamentale Farbkomponenten sind und aus Sekundärstrahlen hervorgehen, und eine Einrichtung zum Kombinieren der drei Farbstrahlen (Md2, Md3, Md4) umfaßt, dadurch **gekennzeichnet,** daß der Separator zwei Sekundärstrahlen aus weißem Licht (Wp, Ws) erzeugt, deren Propagationsrichtungen senkrecht zueinander sind und deren Polarisationen elliptisch und entgegengesetzt sind, und daß einer der Farbstrahlen aus einem der zwei Sekundärstrahlen erzeugt wird und die zwei anderen Farbstrahlen aus dem anderen Sekundärstrahl erzeugt werden.

8. Vorrichtung nach Anspruch 6 oder 7, welche weiterhin eine Quelle für einen zusätzlichen Primärstrahl (W') aus weißem, nicht polarisiertem, kollimiertem Licht (W') umfaßt, wobei die Sekundärstrahlen (W's, W'p), welche aus dem zusätzlichen Primärstrahl erzeugt werden, mit den zwei Sekundärstrahlen (Wp, Ws) ausgerichtet sind, welche aus dem Primärstrahl (W) erzeugt werden.

9. Vorrichtung nach Anspruch 6, 7 oder 8, dadurch **gekennzeichnet,** daß einer der Sekundärstrahlen (Ws, W'p) eines der Ventile (Vb) und eine Einrichtung zum Unterdrücken der zwei unerwünschten Farbkomponenten (Md3, Md4; Md) durchläuft, um einen ersten Farbstrahl (b) zu bilden, und der andere Sekundärstrahl (Wp, W's) einen zweiten Separator (Md2) durchläuft, um zwei Tertiärstrahlen (Wpvb, Wprb), zu bilden, welche jeweils die zwei zu den zwei anderen Ventilen (Vv, Vr) gehörigen Farbkomponenten enthalten und jeweils diese zwei Ventile sowie eine Einrichtung zum Unterdrücken der unerwünschten Farbkomponenten durchlaufen, um die zwei anderen Farbstrahlen (v,r) zu bilden.

10. Vorrichtung nach einem der Ansprüche 6 bis 9, dadurch **gekennzeichnet,** daß die Unterdrückungseinrichtung eine Kombiniereinrichtung bildet.

11. Vorrichtung nach einem der Ansprüche 6 bis 10, dadurch **gekennzeichnet,** daß es Mittel zum Verbessern des Polarisationsgrades der Sekundärstrahlen umfaßt.

12. Vorrichtung nach Anspruch 11, dadurch **gekennzeichnet,** daß die Mittel zum Verbessern des Polarisationsgrades, wie Polarisatoren (B, J), welche die unerwünschten Farbkomponenten absorbieren, von mindestens einem der Primärstrahlen (W, W') durchlaufen werden.

13. Vorrichtung nach Anspruch 10, dadurch **gekennzeichnet,** daß die Mittel zum Verbessern des Polarisationsgrades jeweils von den zwei Sekundärstrahlen durchlaufen werden und Mittel bilden, welche die Polarisationsrichtung der jeweiligen Sekundärstrahlen ändern, je nachdem, ob der eine oder andere der Primärstrahlen verwendet wird, so daß die Polarisationsrichtung des Strahls, welcher jedes der Ventile durchläuft, unabhängig von dem Primärstrahl im wesentlichen konstant gehalten wird, wie zwei optische Ventile (Vp, Vs), die jeweils von zwei neutralen linearen Polarisatoren (Pp, Bs) gefolgt sind.

## Claims

1. A method of projecting a colour image produced by optical valves (Vb, Vv, Vr) modulating three colour beams generated from a primary beam of white light de-polarised and collimated (W) by means of two secondary beams of white light (Wp, Ws), the directions of propagation of which are angularly separated and the polarisations of which are linear and perpendicular to one another, characterised in that one of the colour beams is generated by one of the two secondary beams and the two other colour beams are generated by the other secondary beam.

2. A method of projecting a colour image by optical valves (Vb, Vv, Vr) modulating three colour beams, generated from a primary beam of de-polarised and collimated white light (W), characterised in that the three beams are generated by the primary beam via two secondary beams of white light (Wp, Ws), the directions of propagation of which are angularly separated and the polarisations of which are elliptical and in opposite directions, one of the three colour beams being generated from one of the two secondary beams and the other two colour beams being generated from the other secondary beam.

3. A method as claimed in claim 1 or 2, characterised in that the directions of propagation are preferably perpendicular to one another.

4. A method as claimed in claim 1, 2 or 3, in which, in addition to the de-polarised and collimated white light, an auxiliary primary beam (W') of the above-mentioned primary beam is generated and in which the two secondary beams (W's, W'p) generated from the auxiliary primary beam (W') are aligned with the two secondary beams (Wp, Ws) of the primary beam (W), whereby the auxiliary beam replaces the primary beam if there is no primary beam.

5. A method as claimed in one of claims 1 to 4, characterised in that it consists in suppressing the undesirable colour components before or after modulation by each valve.

6. A device for projecting (10) a colour image, comprising a generator of a de-polarised and collimated beam of white light (W), a separator (MP) for separating the primary beam into two secondary beams of white light (Wp, Ws), the directions of propagation of which are perpendicular to one another and the polarisations of which are linear and perpendicular to one another, three optical valves (Vb, Vv, Vr) for modulating three respective colour beams (b, v, r) respectively representing three basic colour components and being generated from the secondary beams, and means for combining (Md2, Md3, Md4) the three colour beams, characterised in that one of the colour beams is generated from one of the two secondary beams and the other two colour beams are generated by the other secondary beam.

7. A device for projecting (10) a colour image, comprising a generator of a de-polarised and collimated beam of white light (W), a separator (MP) for separating the primary beam into two secondary beams, three optical valves (Vb, Vv, Vr) for modulating three respective colour beams (b, v, r) respectively representing three basic colour components and being generated from the secondary beams, and means for combining (Md2, Md3, Md4) the three colour beams, characterised in that the separator produces two secondary beams of white light (Wp, Ws) the directions of propagation of which are perpendicular to one another and the polarisations of which are elliptical and in opposite directions and in that one of the colour beams is generated from one of the two secondary beams and the other two colour beams are generated from the other secondary beam.

8. A device as claimed in claim 6 or 7, comprising in addition a generator of an auxiliary primary beam (W') of de-polarised and collimated white light (W'), the secondary beams (W's, W'p) emitted from the auxiliary primary beam being aligned with the two secondary beams (Wp, Ws) generated from the primary beam (W).

9. A device as claimed in claim 6, 7 or 8, characterised in that one of the secondary beams (Ws, Wp) passes through one of the valves (Vb) and means for suppressing (Md3, Md4; Md) the two undesirable colour components to form a first colour beam (b), and the other secondary beam (Wp, W's) passes through a second separator (Md2) to form two tertiary beams (Wpvb, Wprb) incorporating respectively the two colour components assigned to the other two valves (Vv, Vr) and passing respectively through these two valves as well as means for suppressing the undesirable colour components to provide the other two colour beams (v, r).

10. A device as claimed in one of claims 6 to 9, characterised in that the suppression means are combining means.

11. A device as claimed in one of claims 6 to 10, characterised in that it has means for improving the rate of polarisation of the secondary beams.

12. A device as claimed in claim 11, characterised in that at least one of the primary beams (W, W') passes through the means for improving the rate of polarisation of the secondary beams, which may be polarisers (B, J,) absorbing the undesirable colour components.

13. A device as claimed in claim 10, characterised in that the two secondary beams respectively pass through the means for improving the rate of polarisation and constitute means for modifying the polarisation direction of the respective secondary beams, depending on whether the one or the other of the primary beams is used to keep the polarisation direction of the beam passing through each of the valves constant independently of the primary beam, such as two optical valves (Vp, Vs) followed respectively by two neutral linear polarisers (Pp, Ps).

FIG.1

FIG. 2

FIG. 3

FIG. 4